(19) Europäisches Patentamt
European Patent Office
Office européen des brevets

(11) Veröffentlichungsnummer: **0 355 543**
**A2**

(12) # EUROPÄISCHE PATENTANMELDUNG

(21) Anmeldenummer: **89114520.3**

(51) Int. Cl.⁴: **C08G 75/02**

(22) Anmeldetag: **05.08.89**

(30) Priorität: **18.08.88 DE 3828057**

(43) Veröffentlichungstag der Anmeldung:
**28.02.90 Patentblatt 90/09**

(84) Benannte Vertragsstaaten:
**BE DE FR GB IT**

(71) Anmelder: **BAYER AG**

**D-5090 Leverkusen 1 Bayerwerk(DE)**

(72) Erfinder: **Köhler, Karl-Heinz, Dr.**
**Buschstrasse 165**
**D-4150 Krefeld(DE)**
Erfinder: **Reinking, Klaus, Dr.**
**Robert-Stolz-Strasse 16b**
**D-5632 Wermelskirchen(DE)**
Erfinder: **Kraft, Klaus, Dr.**
**Doerperhofstrasse 15**
**D-4150 Krefeld(DE)**

(54) **Hochmolekulare, gegebenenfalls verzweigte Co-Polyarylensulfide, Verfahren zu deren Herstellung und deren Verwendung.**

(57) Die Erfindung betrifft hochmolekulare, gegebenenfalls verzweigte Co-Polyarylensulfide, vorzugsweise Co-Polyphenylensulfide, hergestellt durch Umsetzung von Halogenaromaten und geringen Anteilen von 1,3-Dichlorbenzol, mit Schwefelspendern in einem polaren Lösungsmittel, wobei dem Reaktionsgemisch 0,2-100 Mol-%, bezogen auf die Dihalogenaromaten, einer Aminosäure zugegeben werden und deren Verwendung als Einbettmasse für elektronische Bauteile.

EP 0 355 543 A2

Xerox Copy Centre

## Hochmolekulare, gegebenenfalls verzweigte Co-Polyarylensulfide, Verfahren zu deren Herstellung und deren Verwendung

Die Erfindung betrifft hochmolekulare, gegebenenfalls verzweigte Co-Polyarylensulfide, vorzugsweise Co-Polyphenylensulfide, hergestellt durch Umsetzung von Halogenaromaten und geringen Anteilen von 1,3-Dichlorbenzol, mit Schwefelspendern in einem polaren Lösungsmittel, wobei dem Reaktionsgemisch 0,2-100 Mol-%, bezogen auf die Dihalogenaromaten, einer Aminosäure zugegeben werden und deren Verwendung als Einbettmasse für elektronische Bauteile.

Co-Polyarylensulfide und ihre Herstellung sind bekannt (z.B. US-PS 33 54 129).

Im Unterschied zu Polyarylensulfiden, wie z.B. Polyphenylensulfid haben sie eine verringerte Kristallisationsgeschwindigkeit, im Vergleich z.B. zu Polyphenylensulfid.

Für bestimmte Anwendungszwecke, z.B. bei der Herstellung von elektronischen Bauteilen, soll das dazu verwendete Material eine hinreichend langsame Kristallisationsgeschwindigkeit zeigen und der Schmelzpunkt des Materials z.B. zu einem nichtmodifizierten Polyarylensulfid unwesentlich vermindert sein.

Bekanntlich nimmt die Kristallisationsgeschwindigkeit von Polyarylensulfiden nimmt mit zunehmender Molmasse ab. Die Produkte fließen schwer. Die angestrebten Anwendungen erfordern jedoch leicht fließende Produkte.

Es ist z.B. aus Houben-Weyl, Bd. E20,Sp. 3548, aus der DE-PS 2 453 485 bekannt, daß bei der Verwendung von 1,3-Dichlorbenzol neben 1,4-Dichlorbenzol bei der PPS-Synthese sowohl die Kristallisationsgeschwindigkeit, als auch die Gesamt-Kristallinität des Produktes und die damit verbundenen thermischen Eigenschaften und die Lösungsmittelbeständigkeit deutlich herabgesetzt werden.

Es wurde nun gefunden, daß gegebenenfalls verzweigte Copolyarylensulfide, die durch Umsetzung von Halogenaromaten und Anteilen von bis zu 7 mol-% 1,3-Dihalogenbenzolen mit Schwefelspendern hergstellt worden sind, eine hinreichend langsame Kristallisationsgeschwindigkeit des Polymeren auch bei geringeren Molmassen zeigen.

Ihr Schmelzpunkt und Kristallisationsgrad ist z.B. gegenüber dem reinen Polyarylensulfid nur geringfügig erniedrigt.

Gegenstand der Erfindung sind daher Copolyarylensulfide, vorzugsweise Copolyphenylensulfide, die zu 99,7 bis 93 mol-%, vorzugsweise 99,5 bis 96 Mol-% bezogen auf das Copolymere aus wiederkehrenden Einheiten der Formel (I)

$\{S\text{-}Ar\}$ (I),

in welcher

Ar für $C_6$-$C_{24}$-Arylen, vorzugsweise para-Phenylen steht,

und

0,3-7 Mol-%, vorzugsweise 0,5-4 Mol-% bezogen auf Struktureinheiten der Formel (I) und (II) aus wiederkehrenden Einheiten der Formel (II)

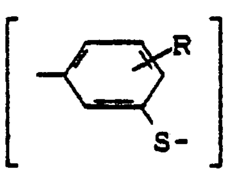 (II),

in welcher

R für H und zum Schwefel(S) ortho-, meta- oder para-ständiges $C_1$-$C_7$-Alkyl und $C_6$-$C_{10}$-Aryl steht und gegebenenfalls bis zu 5 Mol-%, vorzugsweise 0,1-2,5 Mol-%, bezogen auf die Summe der Einheiten der Formeln (I) und (II) aus wiederkehrenden Einheiten der Formel (III)

$[Ar\}_n$ (III),

in welcher

Ar für einen aromatischen Rest mit 6 bis 30 C-Atomen, bevorzugt Phenyl, steht und

n für die Zahl 3 oder 4 steht,

wobei die Struktureinheiten der Formeln (I), (II) und gegebenenfalls (III) überwiegend statistisch im Copolymeren verteilt sein können.

Ein weiterer Gegenstand der Erfindung ist ein Verfahren zur Herstellung der gegebenenfalls verzweigten Co-Polyarylensulfide, vorzugsweise Copolyphenylensulfid, dadurch gekennzeichnet, daß

a) 50-100 Mol-% Dihalogenaromaten der Formel

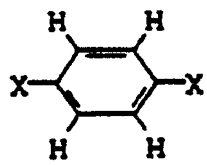

(IV),

und 0-50 Mol-% Dihalogenaromaten der Formel

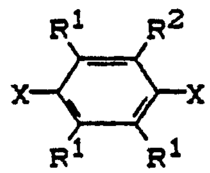

(V),

in denen
X für Halogen wie Chlor oder Brom steht und
$R^1$, $R^2$ gleich oder verschieden sind und Wasserstoff, $C_1$-$C_4$-Alkyl, $C_5$-$C_{10}$-Cycloalkyl, $C_6$-$C_{10}$-Aryl, $C_7$-$C_{10}$-Alkylaryl, $C_7$-$C_{14}$-Arylalkyl sein können, wobei zwei zueinander orthoständige Reste $R^1$ zu einem aromatischen oder heterocyclischen, bis zu drei Heteroatomen wie N, O, S enthaltenden Ring verknüpft sein können und immer ein Rest $R^1$ verschieden von Wasserstoff ist
und

b) 0-5 Mol-%, bevorzugt 0,1-2,5 Mol-%, bezogen auf die Summe der Dihalogenaromaten der Formel IV und V, eines Tri- oder Tetrahalogenaromaten der Formel
$ArX_n$ (VI),
wobei
Ar ein aromatischer $C_6$-$C_{14}$-Ring oder ein heterocyclischer Rest mit 5 bis 14 Ringatomen, wobei bis zu 3 Ring-C-Atome durch Heteroatome wie N, O, S ersetzt sein können, ist,
X für Halogen wie Chlor oder Brom steht und
n für die Zahl 3 oder 4 steht
und

c) Alkalisulfide, bevorzugt Natrium- oder Kaliumsulfid oder deren Mischung, bevorzugt in Form ihrer Hydrate oder wäßrigen Mischungen, gegebenenfalls zusammen mit geringen Mengen Alkalihydroxiden wie Natrium- und Kaliumhydroxid, wobei das molare Verhältnis von (a+b) : c im Bereich von 0,75:1 bis 1,25:1 liegen kann,

d) gegebenenfalls in Anwesenheit von Katalysatoren wie Alkalicarboxylaten, Alkaliphosphaten, Alkaliphosphonaten, Alkalifluoriden, Alkalialkylsulfonaten oder N,N-Dialkylcarbonsäureamiden, wobei dem Reaktionsgemisch 0,2-50 Mol-%, bevorzugt 0,2-25 Mol-%, bezogen auf die Mole Dihalogenaromat, einer Aminosäure zugegeben wird,
und

e) 0,3 bis 7 Mol-%, vorzugsweise 0,5-4 Mol-%, bezogen auf die Summe der Komponenten der Formeln (IV), (V), (VI) und (VII) von 1,3-Dihalogenbenzolen der Formel (VII)

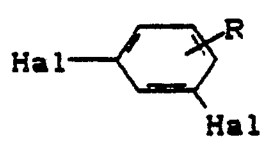

in welcher
Hal für Halogen wie Chlor und Brom steht,
R für H, Hal, ortho-, meta- oder para-ständiges $C_1$-$C_7$-Alkyl und $C_6$-$C_{10}$-Aryl steht, umgesetzt werden.

Die Reaktionszeit kann bis zu 24 Stunden, vorzugsweise 2 bis 18 Stunden betragen. Die Reaktionstemperaturen betragen 150 bis 280° C.

Die Umsetzung kann in verschiedener Weise erfolgen:

Die Alkalisulfide können vorzugsweise in Form ihrer Hydrate und wäßrigen Mischungen oder wäßrigen Lösungen eingesetzt werden. Sie werden zum Umsetzung partiell, oder vorzugsweise vollständig entwässert. Das im Umsetzungsgemisch vorhandene Wasser wird aus dem Ansatz destilliert.

Die Wasserdestillation kann direkt oder mit Hilfe von Azeotropbildnern, wobei bevorzugt als Azeotropbildner die Dihalogenaromaten eingesetzt werden, erfolgen. Für die Entwässerung können alle Reaktionspartner gemischt werden und die Entwässerung des Gesamtgemisches durchgeführt werden. Beliebig andere Reihenfolgen der Zugabe der Reaktionskomponenten vor und nach der Entwässerung sind auch möglich.

Vorzugsweise werden die Reaktionspartner zusammen mit Aminosäuren in Anwesenheit des polaren Lösungsmittels kontinuierlich, unter gleichzeitiger Entfernung des Wassers zusammengeführt. Bei dieser Verfahrensweise kann eine einsetzende Umsetzung über die Dosierungsraten gesteuert werden. Längere Verweilzeiten des Wassers können so vermieden werden.

Wird völlig entwässert, so kann druckfrei bzw. druckarm bis zu ca. 3 bar Druck umgesetzt werden. Zur Erzielung von höheren Reaktionstemperaturen über den Siedepunkt des Lösungsmittels bzw. der Mischung aus Lösungsmittel und Di- und Polyhalogenaromaten hinaus kann höherer Druck bis zu 50 bar angewendet werden.

Die Zugabe des Comonomeren kann zu beliebigen Zeitpunkten der Reaktion erfolgen, vorzugsweise am Ende der Entwässerungsphase.

Die Aufarbeitung des Umsetzungsgemisches und die Isolierung der Co-Polyarylensulfide können in an sich bekannter Weise erfolgen.

Die Co-Polyarylensulfide können direkt aus der Reaktionslösung oder erst z.B. nach Zugabe von Wasser und/oder verdünnten Säuren oder organischen Lösungsmitteln mit geringer Löslichkeit für Polyarylensulfide nach üblichen Verfahrensweisen abgetrennt werden, beispielsweise durch Filtration oder durch Zentrifugieren. Nach der Abtrennung des Produkts schließt sich im allgemeinen eine Wäsche mit protischen Solventien, z.B. Wasser an. Eine Wäsche oder Extraktion mit anderen Waschflüssigkeiten (z.B. Ketone wie Aceton), die auch zusätzlich oder nachträglich zu dieser Wäsche durchgeführt werden kann, ist auch möglich.

Das Co-Polyarylensulfid kann auch beispielsweise durch Abdestillieren des Lösungsmittels und eine anschließende Wäsche, wie oben beschrieben, gewonnen werden.

Die Alkalisulfide können z.B. auch aus $H_2S$ und den Alkalihydroxiden bzw. aus den Hydrogensulfiden und Alkalihydroxiden erhalten werden.

Je nach Anteil an Alkalihdyrogensulfid, das als Verunreinigung im Alkalisulfid in der Reaktionslösung enthalten ist, können zusätzlich bestimmte Anteile Alkalihydroxid zudosiert werden. Gegebenenfalls können auch anstelle der Alkalihydroxide solche Verbindungen zugegeben werden, die unter den Reaktionsbedingungen Alkalihydroxide abspalten bzw. bilden.

Erfindungsgemäß können Dihalogenaromaten der Formel (IV) bzw. (V) eingesetzt werden.

Sollen verzweigte Co-Polyarylensulfide hergestellt werden, sollten mindestens 0,05 Mol-% eines Tri- oder Tetrahalogenaromaten der Formel (VI) eingesetzt werden.

Beispiele für erfindungsgemäß einzusetzende Dihalogenaromaten der Formel (IV) sind: p-Dichlorbenzol, p-Dibrombenzol, 1-Chlor-4-brombenzol. Sie sind allein oder im Gemisch miteinander verwendbar. Besonders bevorzugt sind 1,4-Dichlorbenzol und/oder 1,4-Dibrombenzol.

Beispiele für erfindungsgemäß einzusetzende Dihalogenaromaten der Formel (V) sind: 2,5-Dichlortoluol, 2,5-Dichlorxylol, 1-Ethyl-2,5-dichlorbenzol, 1-Ethyl-2,5-Dibrombenzol, 1-Ethyl-2-brom-5-chlorbenzol, 1,3,4,5-Tetramethyl-2,5-dichlorbenzol, 1-Cyclohexyl-2,5-dichlorbenzol, 1-Phenyl-2,5-dichlorbenzol, 1-Benzyl-2,6-dichlorbenzol, 1-Phenyl-2,5-dibrombenzol, 1-p-Tolyl-2,5-dichlorbenzol, 1-p-Tolyl-2,5-dibrombenzol, 1-Hexyl-2,5-dichlorbenzol. Sie sind allein oder im Gemisch miteinander einsetzbar.

Beispiele für erfindungsgemäß einzusetzende Tri- bzw. Tetrahalogenaromaten der Formel (VI) sind: 1,2,3-Trichlorbenzol, 1,2,4-Trichlorbenzol, 1,2,4-Tribrombenzol, 1,3,5-Trichlor-2,4,5-trimethylbenzol, 1,2,3-Trichlornaphthalin, 1,2,4-Trichlornaphthalin, 1,2,6-Trichlornaphthalin, 2,3,4-Trichlortoluol, 2,3,6-Trichlortoluol, 1,2,3,4-Tetrachlornaphthalin, 1,2,4,5-Tetrachlorbenzol, 2,2′-4,4′-Tetrachlorbiphenyl, 1,3,5-Trichlortriazin.

Beispiele für 1,3-Dihalogenbenzole der Formel VII sind 1,3-Dichlorbenzol, 1,3-Dibrombenzol, 1-Chlor-3-brombenzol, 2,4-Dichlor-toluol, 2,4′-Dichlorbiphenyl, 1-Benzyl-2,4-dichlorbenzol, 2,4-Dibromcumol, 1-Cyclohexyl-3,5-dichlorbenzol.

Generell kann jedes polare Lösungsmittel für die Reaktion eingesetzt werden, das eine ausreichende Löslichkeit der organischen und gegebenenfalls anorganischen Reaktanten unter den Reaktionsbedingungen gewährleistet. Bevorzugt werden N-Alkyllactame verwendet.

N-Alkyllactame sind solche von Aminosäuren mit 3-11 C-Atomen, die gegebenenfalls Substituenten am Kohlenstoffgerüst tragen können, die unter Reaktionsbedingungen inert sind.

Beispielsweise finden als N-Alkyllactame Verwendung:

N-Methylcaprolactam, N-Ethylcaprolactam, N-Isopropylcaprolactam, N-Isobutylcaprolactam, N-Propylcaprolactam, N-Butylcaprolactam, N-Cyclohexylcaprolactam, N-Methyl-2-pyrrolidon, N-Ethyl-2-pyrrolidon, N-Isopropyl-2-pyrrolidon, N-Isobutyl-2-pyrrolidon, N-Propyl-2-pyrrolidon, N-Butyl-2-pyrrolidon, N-Cyclohexyl-2-pyrrolidon, N-Methyl-3-methyl-2-pyrrolidon, N-Cyclohexyl-2-pyrrolidon, N-Methyl-3-methyl-2-pyrrolidon, N-Methyl-3,4,5-trimethyl-2-pyrrolidon, N-Methyl-2-piperidon, N-Ethyl-2-piperidon, N-Isobutyl-2-piperidon, N-Methyl-6-methyl-2-piperidon, N-Methyl-3-ethyl-2-piperidon.

Es können Mischungen der vorstehenden Lösungsmittel gewählt werden.

Als einsetzbare Aminosäuren kommen bevorzugt offenkettige oder cyclische aliphatische $C_1$-$C_{20}$-Aminosäuren in Frage, die seitenständige Reste wie z.B. $C_1$-$C_4$-Alkyl, $C_6$-$C_{14}$-Aryl- bzw. deren Kombination, $C_1$-$C_4$-Alkoxy-Thio-$C_1$-$C_4$-alkylreste oder einen heterocyclischen $C_6$-$C_{14}$-Rest mit bis zu drei Heteroatomen wie N, O, S tragen können. Die Aminogruppe kann dabei als $NH_2$-, NRH- oder $NR_2$-Gruppierung vorliegen, wobei R ein beliebiger Alkylrest, bevorzugt ein $C_1$-$C_4$-Alkylrest, ist. Zwei Reste R können auch die beiden Enden einer Alkylenkette mit seitenständiger Carboxylgruppe sein, die zusammen mit der NH-Gruppierung einen Cyclus bildet.

Die Aminogruppe kann in α-, β-, γ- bzw. ω-Stellung fixiert sein. Es können gegebenenfalls auch Diaminosäuren bzw. Aminodicarbonsäuren eingesetzt werden.

Beispielsweise folgende Aminosäuren seien genannt:

Glycin, α-Alanin, β-Alanin (α- und β-Aminopropionsäure), α-Aminobuttersäure, γ-Aminobuttersäure, α-Amino-isovaleriansäure (Valin), α-Amino-isocapronsäure (Leucin), ε-Aminocapronsäure, 11-Aminoundecansäure, N-Methylamino essigsäure (Sarkosin), N-Methyl-α-aminopropionsäure, N-methyl-β-aminopropionsäure, N-Methyl-γ-aminobuttersäure, N-Methyl-ε-Aminocapronsäure, N-Methyl-11-aminoundecansäure, Aminobutandisäure (Asparaginsäure), 2-Aminopentandisäure (Glutaminsäure), 2-Amio-4-methylthiobutansäure (Methionin), Phenylalanin, Prolin.

Die Reaktion kann gegebenenfalls zusätzlich in Anwesenheit von üblichen Katalysatoren wie z.B.:

Alkalicarboxylaten (DE-AS 24 53 749), Lithiumhalogeniden oder Alkalicarboxylaten (DE-OS 26 23 362), Lithiumchlorid oder Lithiumcarboxylat (DE-OS 26 23 363), Alkalicarbonaten in Kombination mit Alkalicarboxylaten (US-PS 40 38 259), Lithiumacetat (DE-OS 26 23 333), Trialkaliphosphaten (DE-OS 29 30 710), Trialkaliphosphonaten (DE-OS 20 30 797), Alkalifluoriden (DE-OS 30 19 732), Alkalisulfonaten (US-PS 40 38 260), Lithiumcarbonat und Lithiumborat (US-PS 40 30 518) durchgeführt werden.

Die erfindungsgemäßen Co-Polyarylensulfide können mit anderen Polymeren, sowie mit Pigmenten und Füllstoffen -beispielsweise Graphit, Metallpulver, Glaspulver, Quarzmehl, Glasfasern, Kohlefasern -, gemischt oder mit den für Polyarylensulfide üblichen Additiven, beispielsweise üblichen Stabilisatoren oder Entformungsmitteln, versetzt werden.

Im allgemeinen wird das Schmelzfließverhalten von Polyarylensulfiden nach ASTM 1238-70 bei 316° C unter Verwen dung eines 5-kg-Gewichtes gemessen und in g/10 min angegeben.

Bei hohen Schmelzflußwerten kann diese Messung jedoch aufgrund der hohen Ausflußrate der Polymerschmelze Schwierigkeiten bereiten.

Es wurde deshalb die Schmelzviskosität $\mu m$ der Polymerschmelze (in Pa.s) bei 306° C in Abhängigkeit von der Schubspannung (in Pa) mit Hilfe des Instron-Rotationsviskosimeters bestimmt.

Man kann auf diese Weise die Schmelzviskosität in einem sehr weiten Bereich von $10^{-1}$ bis $10^7$ Pa.s bestimmen. In dem Instron-Rheometer wird das Polymer zwischen einer festen Platte und einem drehbaren Kegel geschmolzen und das Drehmoment des Kegels bestimmt. Aus dem Drehmoment, der Winkelgeschwindigkeit und den apparativen Daten kann die Schmelzviskosität in Abhängigkeit von der Schubspannung errechnet werden. Verwendet wurde das Rheometer Modell 3250 der Firma Instron. Durchmesser des Kegels und der Platte 2 cm. Angegeben wird die Schmelzviskosität, die bei einer Schubspannung von $\tau = 10^2$ Pa gemessen wird.

Die erfindungsgemäßen Co-Polyarylensulfide besitzen direkt nach der Isolierung aus dem Reaktionsgemisch im allgemeinen Schmelzviskositäten von 0,3 x $10^3$ bis 5 x $10^6$ Pa.s, vorzugsweise von 1,5 x $10^3$ bis $10^4$ Pa.s. Sie haben gute farbliche Eigenschaften.

Das Kristallisations-Verhalten der Copolyarylensulfide kann durch Differential-Scanning-Calorimetrie (DSC) auf dem Gerät DSC 2 der Fa. Perkin-Elmer bestimmt werden. Die Proben-Einwaagen betragen 8 bis 11 mg, die Heiz- und Kühlraten sind 20 ° C/min. Die Probe wird nach dem ersten Aufheizen mindestns 1 bis 2 min in der Schmelze gehalten, dann abgekühlt und erneut bis zur Schmelze aufgeheitzt. Die dabei erhaltenen Daten sind die Kristallisationstemperatur: $T_K$ (° C) und die Enthalpie $\Delta H_K$ (J/g), sowie die Schmelztemperatur $T_M$ (° C) und $\Delta H_M$ (J/g). Die erfindungsgemäßen Copolyarylensulfide mit langsamer Kristallisation zeichnen sich dadurch aus, daß $\Delta T = T_M - T_K$ größer/gleich 50° C und kleiner 80° C ist.

Sie können direkt durch Extrusion, Extrusionsblasen, Spritzgießen oder sonst übliche Verarbeitungstechniken zu Folien, Formkörpern oder Fasern verarbeitet werden. Diese können zur Herstellung von Formgebilden Verwendung finden, z.B. vorzugsweise als Umhüllungs- und Einbettmassen für elektronische

Bauteile, chemikalienresistente und verwitterungsstabile Teile und Apparateteile.

Beispiele

Beispiel 1: Co-PPS mit 3 mol-% m-Phenylen-Einheiten

In einem 5-l-Edelstahl-Reaktor mit Blattrührer, 2 Tropftrichter, Wasserabscheider und Rückflußkühler werden 2.700 g (2,67 l) N-Methylcaprolactam und 574,8 g (3.91 Mol) p-Dichlorbenzol unter $N_2$-Schutzgas vorgelegt und auf 215° C aufgeheizt. Über einen Zeitraum von ca. 3,5 h wird unter Rühren eine wäßrige Lösung, hergestellt aus 1147,5 g $Na_2S.3H_2O$ (8,94 Mol), 325 g $H_2O$, 141,2 g (1,25 Mol) Caprolactam und 4,3 g (0,107 Mol) NaOH, langsam unter kräftigem Rühren hinzugetropft. Gleichzeitig werden über einen Zeitraum von 2,5-3 h weitere 611,5 g (4,16 Mol) p-Dichlorbenzol hinzugetropft. Nach beendeter Wasserabscheidung und kurzer Absenkung der Sumpftemperatur auf ca. 170° C werden 36,7 g (0,25 Mol) m-Dichlorbenzol im Inertgas-Gegenstrom dem Reaktions-Ansatz hinzugefügt. Die Sumpftemperatur wird auf ca. 230° C erhöht. Nach weiteren 9-stündigem Rühren wird die Reaktion beendet. Man fällt den Reaktions-Ansatz in einem Gefäß mit einer Vorlage von Isopropanol unter Rühren aus, säuert mit $H_2SO_4$ an und filtriert. Der grobpulvrige weiße Filterkuchen wird mit $H_2O$ gewaschen und bei 100° C getrocknet.
Ausbeute: 217,7 g (91,0 %)
Die gewichtsmittlere Molmasse $M_w$ beträgt: 37.850

Beispiel 2: Co-PPS mit 1 mol-% m-Phenylen-Einheiten

Herstellung analog Beispiel 1, jedoch wurden insgesamt 1222 g (8,32 Mol) p-Dichlorbenzol und 12,3 g (0,084 Mol) m-Dichlorbenzol eingesetzt.
Ausbeute: 799 g = 88,0 %
$M_w$ : 17,420

Beispiel 3: Co-PPS mit 5 mol-% m-Phenylen-Einheiten

Herstellung analog Beispiel 1, jedoch wurden insgesamt 1173 g (8,0 Mol) p-Dichlorbenzol und 62 g (0,4 Mol) m-Dichlorbenzol eingesetzt.
Ausbeute: 788 g = 86,8 %
$M_w$ : 31.710

Vergleichsbeispiel: PPS ohne Comonomere

Herstellung analog Beispiel 1, jedoch ohne Zugabe von Comonomer, insgesamt werden 1207 g (8,21 Mol) p-Dichlorbenzol eingesetzt.
Ausbeute: 791 g = 89,2 %
$M_w$ : 43600 (zu Beispiel 1)

Tabelle

| Einfluß des Comonomeren auf das Kristallisations-Verfahren des Co-PPS | | | | | |
|---|---|---|---|---|---|
| Beispiel | mol %[a] Comonomer | $M_w$ | $T_K$(°C) | $\Delta H_K$ (J/g) | $T_M$(°C) |
| 1 | 1 | | 219 | 51 | 278 |
| 2 | 3 | | 196 | 48 | 272 |
| 3 | 5 | | 187 | 46 | 265 |
| Vergleich | - | 28.000 | 239 | 47 | 281 |

a) bezogen auf Mol Dihalogenbenzol

## Ansprüche

1. Copolyarylensulfide, vorzugsweise Copolyphenylensulfide, die zu 99,7 bis 93 Mol-%, vorzugsweise 99,5 bis 96 Mol-% bezogen auf das Copolymere aus wiederkehrenden Einheiten der Formel (I)

$\{S\text{-}Ar\}$ (I),

in welcher

Ar für $C_6$-$C_{24}$-Arylen, vorzugsweise para-Phenylen steht,

und

0,3-7 Mol-%, vorzugsweise 0,5-4 Mol-% bezogen auf Struktureinheiten der Formel (I) und (II) aus wiederkehrenden Einheiten der Formel (II)

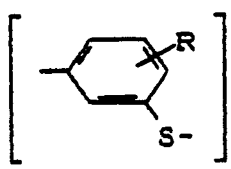
(II),

in welcher

R für H und zum Schwefel(S) ortho-, meta- oder para-ständiges $C_1$-$C_7$-Alkyl und $C_6$-$C_{10}$-Aryl steht und gegebenenfalls bis zu 5 Mol-%, vorzugsweise 0,1-2,5 Mol-%, bezogen auf die Summe der Einheiten der Formeln (I) und (II) aus wiederkehrenden Einheiten der Formel (III)

$[Ar]_n$ (III),

in welcher

Ar für einen aromatischen Rest mit 6 bis 30 C-Atomen, bevorzugt Phenyl steht und

n für die Zahl 3 oder 4 steht,

wobei die Struktureinheiten der Formeln (I), (II) und gegebenenfalls (III) überwiegend statistisch im Copolymeren verteilt sein können.

2. Verfahren zur Herstellung der gegebenenfalls verzweigten Co-Poly-arylensulfide, vorzugsweise Copolyphenylensulfid, dadurch gekennzeichnet, daß

a) 50-100 Mol-% Dihalogenaromaten der Formel

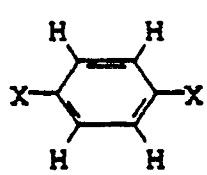
(IV),

und 0-50 Mol-% Dihalogenaromaten der Formel

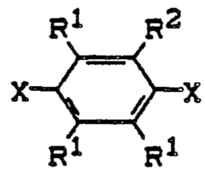

(V),

in denen

X für Halogen wie Chlor oder Brom steht und

$R^1$, $R^2$ gleich oder verschieden sind und Wasserstoff, $C_1$-$C_4$-Alkyl, $C_5$-$C_{10}$-Cycloalkyl, $C_6$-$C_{10}$-Aryl, $C_7$-$C_{10}$-Alkylaryl, $C_7$-$C_{14}$-Arylalkyl sein können, wobei zwei zueinander orthoständige Reste $R^1$ zu einem aromatischen oder heterocyclischen, bis zu drei Heteroatomen wie N, O, S enthaltenden Ring verknüpft sein können und immer ein Rest $R^1$ verschieden von Wasserstoff ist

und

b) 0-5 Mol-%, bevorzugt 0,1-2,5 Mol-%, bezogen aus die Summe der Dihalogenaromaten der Formel IV und V, eines Tri- oder Tetrahalogenaromaten der Formel

$ArX_n$ (VI),

wobei

Ar ein aromatischer $C_6$-$C_{14}$-Ring oder ein heterocyclischer Rest mit 5 bis 14 Ringatomen, wobei bis zu 3 Ring-C-Atome durch Heteroatome wie N, O, S ersetzt sein können, ist,

X für Halogen wie Chlor oder Brom steht und

n für die Zahl 3 oder 4 steht

und

c) Alkalisulfide, bevorzugt Natrium- oder Kaliumsulfid oder deren Mischung, bevorzugt in Form ihrer Hydrate oder wäßrigen Mischungen, gegebenenfalls zusammen mit geringen Mengen Alkalihydroxiden wie Natrium- und Kaliumhydroxid, wobei das molare Verhältnis von (a+b) : c im Bereich von 0,75:1 bis 1,25:1 liegen kann,

d) gegebenenfalls in Anwesenheit von Katalysatoren wie Alkalicarboxylaten, Alkaliphosphaten, Alkaliphosphonaten, Alkalifluoriden, Alkalialkylsulfonaten oder N,N-Dialkylcarbonsäureamiden, wobei dem Reaktionsgemisch 0,2-50 Mol-%, bevorzugt 0,2-25 Mol-%, bezogen auf die Mole Dihalogenaromat, einer Aminosäure zugegeben wird,

und

e) 0,3 bis 7 Mol-%, vorzugsweise 0,5-4 Mol-%, bezogen auf die Summe der Komponenten der Formeln (IV), (V), (VI) und (VII) von 1,3-Dihalogenbenzolen der Formel (VII)

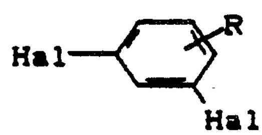

in welcher

Hal für Halogen wie Chlor und Brom steht,

R für H, Hal, ortho-, meta- oder para-ständiges $C_1$-$C_7$-Alkyl und $C_6$-$C_{10}$-Aryl steht,

umgesetzt werden.

3. Verwendung von Co-Polyarylensulfiden nach Anspruch 1 zur Herstellung von geformten Körpern.